# FASCICULE DE BREVET EUROPEEN

(11) **EP 4 522 980 B1**
(45) Date de publication et mention de la délivrance du brevet: **18.11.2026**
(21) Numéro de dépôt: 23731097.4
(22) Date de dépôt: 24.05.2023
(51) Int. Cl.: G01N 21/71, G06N 3/08

(54) **METHODE DE GENERATION DE DONNEES SPECTRALES SYNTHETIQUES**
VERFAHREN ZUR ERZEUGUNG SYNTHETISCHER SPEKTRALDATEN
METHOD FOR GENERATING SYNTHETIC SPECTRAL DATA

(30) Priorité: 21.06.2022 FR 2206069
(43) Date de publication de la demande: 19.03.2025
(73) Titulaire: Commissariat à l'Energie Atomique et aux Energies Alternatives, 75015 Paris (FR)
(72) Inventeur: FINOTELLO, Riccardo, 91440 BURES SUR YVETTE (FR); TAMAAZOUSTI, Mohamed, 92140 CLAMART (FR); SIRVEN, Jean-Baptiste, 75013 PARIS (FR)
(74) Mandataire: Atout PI Laplace
(86) Numéro de dépôt international: PCT/EP2023/063877
(87) Numéro de publication internationale: WO 2023/247128

(56) Documents cités:
- YOUNSIK KIM ET AL: "Deep learning-based statistical noise reduction for multidimensional spectral data", ARXIV.ORG, CORNELL UNIVERSITY LIBRARY, 201 OLIN LIBRARY CORNELL UNIVERSITY ITHACA, NY 14853, 2 July 2021 (2021-07-02), XP091006736, DOI: 10.1063/5.0054920
- YOSHINO SOICHI ET AL: "Signal preprocessing of deep-sea laser-induced plasma spectra for identification of pelletized hydrothermal deposits using Artificial Neural Networks", SPECTROCHIMICA ACTA. PART B: ATOMIC SPECTROSCOPY., vol. 145, 4 April 2018 (2018-04-04), US, pages 1 - 7, XP093017278, ISSN: 0584-8547, DOI: 10.1016/j.sab.2018.03.015
- SHEELA RAMANNA ET AL: "Machine Learning of polymer types from the spectral signature of Raman spectroscopy microplastics data", ARXIV.ORG, CORNELL UNIVERSITY LIBRARY, 201 OLIN LIBRARY CORNELL UNIVERSITY ITHACA, NY 14853, 14 January 2022 (2022-01-14), XP091137487
- CHANG FU ET AL: "Repeatability enhancing method for one-shot LIBS analysis via spectral intensity correction based on probability distribution", vol. 36, no. 8, 4 August 2021 (2021-08-04), pages 1712 - 1723, XP093017244, ISSN: 0267-9477, Retrieved from the Internet <URL:https://pubs.rsc.org/en/content/articlepdf/2021/ja/d1ja00040c> DOI: 10.1039/D1JA00040C
- WU XIJUN ET AL: "Total synchronous fluorescence spectroscopy coupled with deep learning to rapidly identify the authenticity of sesame oil", SPECTROCHIMICA ACTA PART A: MOLECULAR AND BIOMOLECULAR SPECTROSCOPY, ELSEVIER, AMSTERDAM, NL, vol. 244, 20 August 2020 (2020-08-20), XP086298701, ISSN: 1386-1425, [retrieved on 20200820], DOI: 10.1016/J.SAA.2020.118841
- CASTIGLIONI ISABELLA ET AL: "AI applications to medical images: From machine learning to deep learning", PHYSICA MEDICA, ACTA MEDICA EDIZIONI E CONGRESSI, ROME, IT, vol. 83, 1 March 2021 (2021-03-01), pages 9 - 24, XP086596630, ISSN: 1120-1797, [retrieved on 20210301], DOI: 10.1016/J.EJMP.2021.02.006

## Description

L'invention concerne le domaine de l'analyse de données spectrales, c'est-à-dire de données qui présentent une pluralité de valeurs d'intensité dans différents canaux de longueurs d'onde ou bandes spectrales. Les données peuvent être à la fois des données multi- ou hyperspectrales, où le nombre de bandes spectrales varie de quelques dizaines à des centaines, et des données provenant de spectres d'émission ou absorption d'une espèce chimique, contenant des milliers de canaux de longueur d'onde. L'invention est applicable à tout type d'analyse spectrale dès lors qu'un grand nombre de répliques des données d'entrée est nécessaire, et que celles-ci ne sont pas facilement disponibles en grandes quantités. L'invention est applicable en particulier mais pas uniquement pour l'analyse quantitative (par exemple, la détermination de la concentration) ou pour de la classification d'échantillons pour lesquels des données spectrales sont mesurées.

Plus précisément, l'invention porte sur une méthode de synthèse de données spectrales synthétiques pour fournir des données d'apprentissage à un moteur d'apprentissage automatique pour l'analyse des espèces associées aux données spectrales, notamment, mais pas exclusivement, pour l'analyse quantitative ou qualitative d'espèces chimiques.

Une application possible de l'invention concerne la détermination de la concentration des éléments chimiques ou la classification d'échantillons à partir de données spectrales par exemple acquises au moyen d'une technique de spectroscopie d'émission atomique de plasma induit par laser, ou « Laser-Induced Breakdown Spectroscopy » (LIBS) en anglais. L'invention ne se limite pas à cette technique particulière, elle peut s'appliquer à tout type de technique de spectroscopie qui produit des données multi- ou hyperspectrales ou des données spectrales d'émission ou absorption d'espèces chimiques.

L'invention s'applique à tout type d'analyse spectrale. En fait, l'invention peut être utilisée dans le cadre d'une analyse quantitative, qui consiste, par exemple, à prédire une quantité caractérisant des échantillons à analyser. Elle s'applique également à l'analyse qualitative, comme la segmentation ou l'identification de scènes ou cartographies par une technique qui produit des images multi- ou hyperspectrales ou des spectres d'espèces chimiques obtenus par une technique spectroscopique telle que la LIBS ou autre. De plus, elle peut également s'appliquer à la génération d'échantillons pour la super-résolution et d'autres techniques d'apprentissage non supervisées. La différence étant simplement la nature des variables à prédire ou à traiter, qui sont, par exemple, continues en quantification (par exemple, la concentration d'une espèce), discrètes en classification (par exemple, une étiquette de classe ou catégorie), ou du même type que les données d'entrée pour une analyse non supervisée (par exemple, les valeurs d'intensités des bandes spectrales d'un pixel en super-résolution d'images).

Dans le cadre des données spectrales, différentes méthodes de traitement sont utilisées pour différents types d'analyses. En particulier, des méthodes multivariées d'apprentissage profond, basées principalement sur des réseaux de neurones artificiels, ont été explorées et utilisées, par exemple pour l'analyse quantitative (étalonnage, régression) ou pour la classification des échantillons. Des exemples de telles méthodes sont décrits dans les références [1]-[3]. Cependant, ces algorithmes sont, en général, caractérisés par leur capacité d'apprendre à partir d'un nombre de réalisations (spectres) très élevé, ce qui limite leur utilisation dans le cas où les jeux de données disponibles contiennent un nombre restreint de réalisations.

Contrairement aux approches les plus utilisées et basées sur des réseaux de neurones entièrement connectés telles que présentées dans [4], les développements récents dans l'analyse des signatures spectrales ont conduit à l'introduction d'architectures inspirées des algorithmes de détection d'objets et de classification d'images, basés sur des réseaux de neurones convolutifs (voir par exemple [5], [6]). Bien que le même problème se pose pour tous les modèles de réseaux de neurones, ce type d'architecture en particulier vise l'apprentissage de modèles à partir de données d'entraînement, ce qui nécessite un grand nombre de réalisations afin d'apprendre correctement à associer par un modèle, par exemple dans le cadre de l'apprentissage supervisé, des données d'entrée aux données de sortie. A titre d'exemple, les jeux de données standards pour le traitement des images contiennent un nombre de données d'entraînement de l'ordre de 10⁴ à 10⁶ échantillons (voir [20]), alors que les jeux de données LIBS habituels contiennent des dizaines ou des centaines de spectres (voir [7]), ou quelques milliers à dizaines de milliers pour la cartographie LIBS (voir [8]). Ce constat est également vrai pour les autres types de spectroscopie.

L'obtention d'un grand nombre de données spectrales est un problème à résoudre. Par exemple, dans le cadre de la spectroscopie LIBS, la collecte d'un grand nombre de spectres peut être empêchée par la destruction de la surface de l'échantillon, ou par une surface disponible trop petite, voire par une simple question de temps (par exemple, l'impossibilité de sonder suffisamment rapidement une zone donnée).

Au-delà de la spectroscopie LIBS, le déficit de données spectrales d'entrainement peut également être attribué au coût élevé de l'obtention d'un nombre suffisant de données étiquetées pour l'apprentissage.

Il existe donc un besoin pour augmenter de manière réaliste le nombre de données d'apprentissage disponibles pour des données spectrales.

Le problème de carence de réalisations dans le cadre de l'analyse spectrale est rarement abordé dans la littérature. On recense quelques travaux, commentés ci-dessous, visant à enrichir les informations données aux architectures (par exemple réseaux de neurones) ou à se concentrer uniquement sur une partie arbitrairement pertinente de l'information, mais, du point de vue des techniques d'apprentissage profond, l'absence d'un nombre élevé de réalisations différentes (c'est-à-dire des spectres) peut encore conduire à des problèmes de sur-apprentissage ou de mauvaises performances de généralisation.

En général, l'augmentation et la synthèse des données sont des méthodes utilisées dans le cadre de l'apprentissage profond, par exemple dans le cadre de la vision par ordinateur. L'idée de base est de créer un sur-échantillonnage des données d'entrée d'une façon non triviale. Classiquement, avec l'augmentation de données on enrichit les données d'apprentissage en utilisant des transformations (rotations, élargissements, réflexions, etc.) des données d'entrainement pour produire de nouvelles réalisations (voir par exemple [9], [10], [12], [18]) dans la plupart des applications d'apprentissage profond, telles que la classification d'images, les séries temporelles, le traitement du langage naturel, etc. Cette procédure permet de produire un nombre arbitraire (sauf contraintes liées à la taille ou à la forme des données) d'exemples produits directement à partir de la distribution des données d'entrainement. L'effet est une régularisation et stabilisation de l'apprentissage, ce qui génère un modèle qui généralise mieux soit dans le cadre de la classification soit pour des tâches de régression. La synthèse de nouvelles données est couramment employée pour le traitement des images (par exemple, la super-résolution) [11]. De plus, le développement de modèles d'apprentissage profond sur des jeux de données plus petits, notamment des jeux de données spectroscopiques ou dans le cadre du « one-shot learning » en vision par ordinateur, est un sujet d'actualité. La référence [21] propose de générer des spectres synthétiques dans le cadre d'une méthode ARPES ("Angle-Resolved Photoemission Spectroscopy") correspondant à des spectres à basse intensité générés à partir de spectres obtenus par la technique ARPES à haute intensité en suivant la même distribution de Poisson que les spectres mesurés.

Par exemple la référence [2] porte sur une méthode d'« augmentation de données » pour la technique LIBS en utilisant des spectres des éléments chimiques résolus dans le temps pour une analyse multivariée avec des réseaux de neurones peu profonds (« shallow neural networks » en anglais). C'est-à-dire que pour chaque cratère à la surface, au lieu d'une signature spectrale unique, plusieurs spectres sont enregistrés à des délais différents du tir laser. La concaténation de ces spectres est alors utilisée, pour chaque cratère, comme représentative de la mesure, qui possède désormais une direction temporelle supplémentaire, d'où le nom de « spectres résolus dans le temps ». Le jeu de données utilisé pour l'analyse des réseaux de neurones est ainsi constitué d'une collection de spectres résolus dans le temps. Ici, l'appellation « augmentation » des données n'est pas utilisée correctement. En effet, le nombre de réalisations n'est pas effectivement augmenté, mais l'on augmente la quantité d'information pour une réalisation donnée. On pourrait dire que la qualité des données a certainement augmenté, même si aucune nouvelle donnée n'a été produite. L'analyse proposée dans la référence [3] utilise le même type de données résolues dans le temps, sans explicitement parler d'« augmentation de données ».

Les méthodes décrites dans les références [13], [14] utilisent des méthodes d'apprentissage profond, pour l'analyse des données LIBS, basées sur des réseaux de neurones convolutifs. Cependant, le problème de l'augmentation des données n'y est pas abordé. Plus récemment, les auteurs dans [15] ont introduit une technique d'augmentation de données dérivée directement de la méthodologie standard de traitement d'images en apprentissage profond. Leur analyse est, encore une fois, basée sur des réseaux de neurones convolutifs et porte sur des cartographies élémentaires bidimensionnelles avec une résolution spatiale de 150 µm entre les cratères. En partant des cartographies obtenues à partir de l'intensité de raies présélectionnées, ils utilisent des coupes, des recombinaisons, des filtres d'images (par exemple, l'ajout de bruit Gaussien et d'un filtre médian) et des réflexions pour produire des données d'apprentissage supplémentaires pour la classification des échantillons. Notons que, dans ce cas, les auteurs n'utilisent pas directement les informations spectrales contenues dans les données originaires, mais ils extraient des cartographies pour exploiter leurs informations spatiales. L'augmentation est ensuite effectuée directement sur les cartographies. Dans le cadre de la classification d'images, et aux fins illustrées par les auteurs, les techniques utilisées dans l'article peuvent améliorer les capacités de généralisation du réseau classificateur. Cependant, à des fins plus générales, l'utilisation de coupes et de recombinaisons pour générer de nouvelles images ne modifie pas directement les données associées à chaque pixel (c'est-à-dire à chaque cratère), mais les réorganise à travers la cartographie : une telle technique d'augmentation de données conduit à un sur-échantillonnage des données collectées au niveau de la cartographie d'intensité, plutôt qu'à la production de spectres. Par exemple, d'autres types d'analyses, telles que la régression multivariée pour l'analyse quantitative, peuvent ne pas bénéficier largement de ce traitement, car il peut être considéré comme une simple réplication des données d'entrée du réseau de régression (même s'il peut conduire à de légères améliorations des performances). De plus, de très petites cartographies élémentaires, dans lesquelles seul un petit nombre de tirs laser est effectué, peuvent n'en bénéficier que marginalement, car le nombre de transformations pertinentes est considérablement réduit.

L'article de revue [16] présente le concept d'augmentation des données en proposant la génération d'un nombre arbitraire de spectres par l'ajout de bruit aléatoire sur chaque spectre expérimental. Cependant, aucune réalisation de cette technique n'est montrée dans l'article et aucune définition du bruit aléatoire n'est proposée.

D'autres analyses décrites dans la référence [17] utilisent différents types de données de spectroscopie LIBS, par exemple en prenant en compte seulement des canaux de longueur d'onde spécifiques pour l'analyse, dans le but de réduire la taille des données d'entrainement par rapport à la taille du modèle de réseau de neurones. Cette approche permet d'utiliser une version réduite des données d'entrée, où les informations supposées pertinentes ont été préalablement extraites pour améliorer l'analyse. Cependant, cela peut toujours conduire à des problèmes de sur-apprentissage et à une mauvaise capacité de généralisation en raison du nombre restreint de données disponibles, mais aussi à une éventuelle réduction des performances due à la perte d'informations due à la sélection préalable des données d'entrée.

Dans le cadre de l'analyse des images multi- ou hyperspectrales on peut aussi mentionner des méthodes d'augmentation de données traditionnelles, généralement définies pour des tâches comme la détection d'objets ou la segmentation sémantique (par exemple la référence [9] donne des exemples et une bibliographie complète de l'état de l'art). Cependant, dans ce cadre, le but de l'analyse est différent et généralement limité à la classification ou caractérisation des scènes (de même, ces techniques ont également été appliquées dans le cadre de la spectroscopie LIBS dans [15], comme discuté ci-dessus).

L'invention vise à surmonter les limitations de l'art antérieur en apportant une méthode de synthèse de données spectrales, qui permet de mieux exploiter des algorithmes d'apprentissage profond et, de manière plus générale, tout algorithme qui nécessite un grand nombre de données spectrales d'entrée. Cet apport permet de mettre en œuvre des algorithmes plus performants, capables de réduire les incertitudes des prédictions et de construire des modèles fiables, mais qui nécessitent un grand nombre de données d'apprentissage.

L'invention propose une méthode de synthèse de données spectrales, utilisables pour l'apprentissage comme régularisation et suréchantillonage des données d'entrainement, ou directement comme données d'apprentissage. La méthode de synthèse selon l'invention se base sur les données expérimentales pour modéliser la distribution du signal.

Cette distribution peut, ensuite, être utilisée pour générer un nombre arbitraire de spectres, qui représentent statistiquement les données réelles. Ce nouvel ensemble de données peut être utilisé pour l'entrainement des algorithmes d'apprentissage profond, qui nécessitent un grand nombre de données : comme ces données modélisent une distribution réelle, les algorithmes maintiennent leur capacité prédictive et leur précision sur de nouvelles données acquises expérimentalement par une méthode de spectroscopie.

L'invention, au contraire de certaines techniques de l'état de l'art, porte sur la génération d'un nombre arbitraire de données spectrales d'entraînement véritablement différentes, représentant statistiquement l'ensemble de données expérimentales, sans contrainte sur le nombre de canaux de longueurs d'onde ou bandes spectrales contenus dans les spectres.

L'invention propose une technique différente de l'état de l'art pour la synthèse d'un nombre arbitraire de spectres. Comme l'ajout direct de bruit aléatoire sur un nombre limité de spectres peut modifier la distribution d'apprentissage (c'est-à-dire qu'il peut changer la nature de la distribution, vu que le nombre de réalisation est relativement faible), les spectres sont d'abord modélisés sur la base d'une distribution statistique connue ou estimée (par exemple, à l'aide d'une méthode d'estimation par noyau, ou « kernel density estimation » en anglais), puis générés en fonction de leur distribution statistique pour élargir l'espace des caractéristiques des données d'entrée, c'est-à-dire couvrant une plus grande partie du domaine de définition de la distribution. De cette façon, l'ensemble de données généré est toujours une représentation statistique des données originales avec un nombre arbitrairement grand de répliques. Un bruit aléatoire (par exemple, de nature Gaussienne ou uniforme) peut ensuite être ajouté séparément sur chaque réplique synthétisée, afin d'améliorer la capacité de généralisation de l'algorithme. L'utilisation des données synthétisées fournit un nombre de données d'entrée suffisamment important pour que l'ajout de bruit soit en moyenne négligeable, sans impact global sur la distribution des données. Au contraire, l'ajout du bruit sur un nombre restreint de données peut changer significativement la nature des données et perturber l'apprentissage des algorithmes. La génération à partir d'une distribution statistique garantit que chaque réplique est une représentation différente des données d'entraînement, ce qui confère à l'algorithme la capacité d'apprendre une plus grande quantité de caractéristiques, et que le nombre de répliques est suffisamment élevé pour garantir que, statistiquement, la distribution d'apprentissage soit représentative des échantillons analysés.

Différemment de l'état de l'art, l'invention propose une méthode d'augmentation directement liée à la nature des signatures spectrales pour résoudre le problème du nombre de spectres disponibles pour l'apprentissage. Comme aucune connaissance préalable sur le type de données spectrales n'est nécessaire (par exemple, elle peut être estimée), le même principe présenté ici peut être étendu à tout type de données multi- ou hyperspectrales, pas nécessairement liées à la technique LIBS.

L'invention porte sur une méthode de modélisation de la distribution des spectres pour la synthèse réaliste des données, par rapport aux données expérimentales. L'invention prévoit également une étape d'ajout de bruit aléatoire à partir des données synthétisées, contrairement à l'ajout du bruit directement sur les données originales. Cette technique permet de générer un nombre arbitraire de données effectivement représentatives des échantillons et, ensuite, de modifier les intensités spectrales, sans altérer en moyenne la distribution originale des données expérimentales (qui, dans les applications, n'est constituée que de quelques réalisations, et n'est pas représentative de la vraie distribution des données).

Contrairement aux techniques habituelles d'augmentation des données en vision par ordinateur, toute transformation (décalage, translation, réflexion, dilatation) appliquée aux données spectrales modifiera certainement la signification physique des spectres : par exemple, la translation en longueur d'onde d'une raie d'émission attribuée à un élément peut conduire à l'attribuer à un autre élément. L'invention propose de générer de nouveaux spectres d'apprentissage, c'est-à-dire synthétiser des données d'apprentissage en utilisant une modélisation théorique de la distribution des données réelles. Dit autrement, on utilise le profil spectral obtenu expérimentalement par une méthode de spectroscopie pour générer des spectres ayant, en moyenne, la même distribution pour chaque canal de longueur d'onde. Cette approche permet de résoudre le problème du nombre de réalisations (signatures spectrales), sans dénaturer le contenu physique des spectres. La génération des spectres est faite en utilisant des extractions aléatoires à partir de cette distribution : la méthode permet aussi de recouvrir une partie plus grande de l'espace dans lequel les données originales sont définies (par exemple dans le cadre des données spectroscopiques, l'espace des longueurs d'onde).

L'invention a pour objet une méthode, mise en œuvre par ordinateur, de synthèse de données spectrales comprenant les étapes de :
- Acquérir un ensemble de données spectrales associant chacun un spectre à un échantillon ayant une composition chimique donnée, par une méthode de spectroscopie,
- Déterminer un modèle théorique de la distribution des intensités du spectre pour chaque canal de longueur d'onde du spectre basé sur une loi de Poisson,
- Générer un ensemble de données spectrales synthétiques en générant pour chaque canal de longueur d'onde du spectre, une intensité tirée aléatoirement selon une distribution de probabilité selon une loi de Poisson paramétrée par l'intensité mesurée sur le spectre acquis.

Selon un aspect particulier de l'invention, l'ensemble de données spectrales comprend plusieurs mesures de spectres pour le même échantillon et la méthode comprend une étape de détermination du spectre moyen sur l'ensemble des mesures.

Selon un aspect particulier de l'invention, les données spectrales synthétiques sont générées en ajoutant à l'intensité tirée aléatoirement une valeur de bruit tirée selon une distribution uniforme dans un intervalle centré sur l'intensité et de largeur paramétrable.

Selon un aspect particulier de l'invention, les données spectrales synthétiques sont générées en ajoutant à l'intensité tirée aléatoirement une valeur de bruit tirée selon une distribution normale centrée sur l'intensité, dont l'écart type est un paramètre modifiable.

Selon un aspect particulier de l'invention, les données spectrales sont acquises au moyen d'une méthode de spectroscopie d'émission atomique de plasma induit par laser.

Selon un aspect particulier de l'invention, les données spectrales proviennent de spectres d'émission ou d'absorption d'espèces chimiques.

L'invention a aussi pour objet une méthode d'analyse quantitative ou qualitative de données spectrales comprenant les étapes de :
- Générer un ensemble de données spectrales synthétiques en exécutant la méthode de synthèse de données spectrales selon l'invention,
- Entrainer un modèle d'apprentissage automatique à partir des données spectrales synthétiques générées.
- Utiliser le modèle entrainé pour réaliser une analyse quantitative ou qualitative de données spectrales.

L'invention a encore pour objet un programme d'ordinateur comportant des instructions pour l'exécution d'une méthode selon l'invention, lorsque le programme est exécuté par un processeur ainsi qu'un support d'enregistrement lisible par un processeur sur lequel est enregistré un programme comportant des instructions pour l'exécution d'une méthode selon l'invention, lorsque le programme est exécuté par un processeur.

D'autres caractéristiques et avantages de la présente invention apparaîtront mieux à la lecture de la description qui suit en relation aux dessins annexés suivants.
[Fig. 1] représente un exemple de données spectrales caractérisant un échantillon contenant différentes espèces chimiques,
[Fig. 2] représente un diagramme des étapes de mise en œuvre d'une méthode de génération de données spectrales synthétiques selon l'invention,
[Fig. 3] représente un organigramme des étapes de mise en œuvre d'une méthode d'apprentissage automatique d'un modèle d'analyse de données spectrales selon l'invention,
[Fig. 4] représente un diagramme quantile-quantile des distributions réelle et synthétique pour un échantillon de ciment (type I) avec l'ajout de NaCl,
[Fig. 5a] représente un exemple de spectre moyen, [Fig. 5b] représente une illustration des résultats obtenus avec une modélisation de type Gaussienne, [Fig. 5c] représente une illustration des résultats obtenus avec une modélisation basée sur un noyau « tophat ». [Fig. 5] représente une illustration comparative des résultats obtenus par l'invention avec une modélisation de type Gaussienne et une modélisation basée sur un noyau « tophat »

La technologie LIBS permet de réaliser une analyse de matériau par ablation laser et spectroscopie. Les données acquises via cette technique sont des données spectrales qui correspondent, pour chaque point d'une zone, à un spectre d'émission comprenant des raies atomiques caractéristiques de la composition chimique élémentaire de l'échantillon.

Les données spectrales LIBS sont obtenues en focalisant un faisceau laser en un point d'une surface à analyser. L'émission d'un plasma résultant de cette focalisation est collectée et traitée par spectroscopie pour obtenir un spectre de raies atomiques. Le processus est itéré pour chaque point de la zone à analyser.

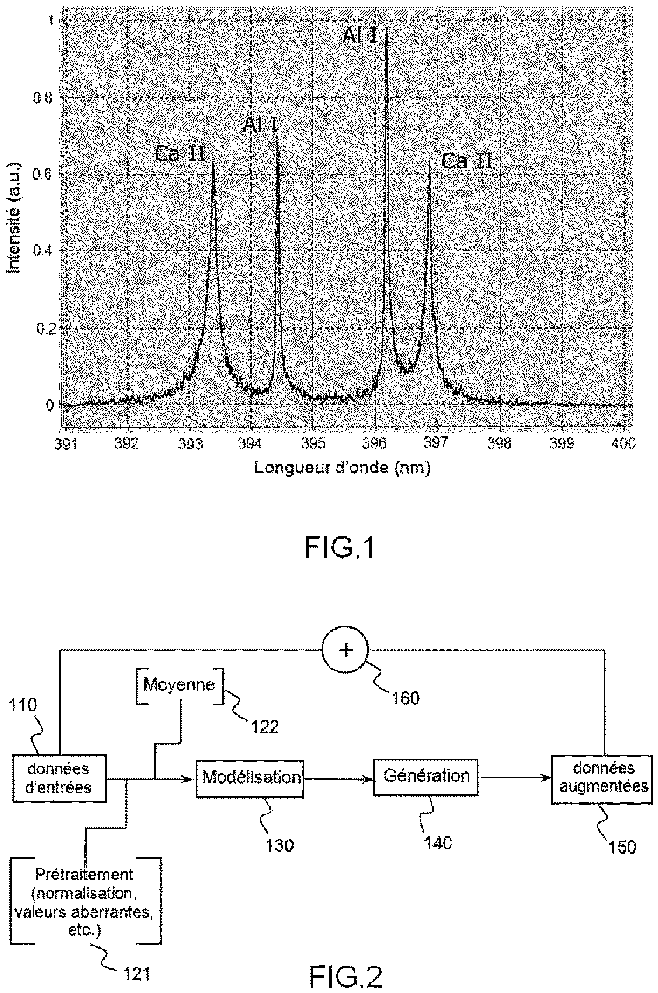

La figure 1 représente, à titre illustratif, un exemple de spectre de raies atomiques 101 obtenu pour un échantillon ayant une certaine composition chimique. Sur la figure 1, on a identifié les signatures spectrales de certains éléments chimiques (Ca, Al) qui correspondent à des raies atomiques dans des canaux de longueurs d'ondes donnés.

Comme expliqué en préambule, l'invention vise à générer des données spectrales synthétiques à partir d'une ou plusieurs mesures de données spectrales du type de celle décrite à la figure 1.

La méthode selon l'invention est décrite à la figure 2.

La première étape 110 consiste à acquérir des données spectrales au moyen d'un dispositif d'acquisition approprié selon l'application visée. Si l'application concerne une analyse qualitative ou quantitative d'échantillons, par exemple d'un matériau, les données sont des données spectrales et sont par exemple acquises au moyen d'un dispositif de spectrométrie, par exemple de spectroscopie d'émission atomique de plasma induit par laser, ou un dispositif basé sur une technique de spectrométrie de masse couplée à une ablation laser ou à un faisceau d'ions ou à un faisceau de rayons X ou encore une technique de spectrométrie induite par un rayonnement synchrotron ou par un faisceau de particules chargées ou encore une spectrométrie de type Raman ou de type IR. Si l'application concerne une méthode de cartographie d'une zone géographique, les données multi- ou hyperspectrales sont par exemple acquises au moyen d'un capteur d'imagerie multi- ou hyperspectrale embarqué dans une charge utile de satellite. L'invention s'applique plus généralement pour tout autre dispositif d'acquisition de données multi- ou hyperspectrales permettant de générer, pour un échantillon donné, un spectre dans une plage de longueurs d'onde donnée.

La première étape 110 peut consister en la mesure d'un seul spectre par échantillon ou de plusieurs spectres par échantillon.

Dans une étape optionnelle 121, les données spectrales mesurées sont prétraitées afin d'estimer et de corriger un éventuel offset lié à l'acquisition, de normaliser les différents spectres mesurés afin qu'ils soient homogènes entre eux et de supprimer les zones aveugles si elles existent. Autrement dit, chaque spectre mesuré peut être normalisé de différentes manières, par exemple par une raie ou une bande de longueurs d'onde d'émission/absorption connue, soit par l'intensité maximale, soit par d'autres méthodes. Si on utilise plusieurs spectres supposés représentatifs de la mesure, on peut aussi se focaliser sur un canal de longueur d'onde spécifique, considérer l'intensité moyenne et écarter les spectres qui contiennent des valeurs aberrantes pour ce canal de l'ensemble des données. Ce prétraitement permet d'utiliser seulement les spectres les plus représentatifs de l'échantillon, sans modéliser forcément des défauts en même temps.

Si plusieurs mesures de spectres sont réalisées pour un même échantillon, les spectres sont moyennés à l'étape 122. Autrement dit, on peut utiliser plusieurs spectres représentant le même échantillon pour modéliser la distribution (par exemple, suite à plusieurs tirs laser sur le même échantillon dans le cadre de la technique LIBS). Les spectres utilisés pour la génération des données synthétiques sont moyennés pour obtenir une représentation plus précise de l'échantillon analysé. Dit autrement, au lieu d'utiliser un seul spectre comme représentatif d'un échantillon, on peut répliquer la mesure spectroscopique plusieurs fois et utiliser le spectre moyen obtenu d'un échantillon pour la synthèse. Cette approche permet d'avoir une représentation plus précise de l'échantillon, en prenant en compte des différences possibles en moyenne sur la surface. Toutefois, il faut noter que cette réalisation de l'invention est plus spécifiquement applicable à des données spectrales sans une notion d'image, c'est-à-dire pour des données pour lesquelles la mesure spectroscopique peut être répétée sans changements dans la signification physique des données (chaque spectre doit être représentatif de la même distribution). L'application de cette réalisation à des cartographies multi- ou hyperspectrales sous-entend la présence de plusieurs réalisations de la même image pour pouvoir moyenner la contribution d'un seul pixel. Cette application n'est pas possible avec la technique LIBS puisque la nature destructive de l'interaction du laser avec la surface ne permet pas de reproduire la mesure au même endroit. En revanche, l'acquisition d'images multi- ou hyperspectrales par une méthode de cartographie orbitale par exemple, permet de répliquer plusieurs fois la même image.

Dans tous les cas, on obtient une mesure expérimentale d'un spectre.

Ensuite, on détermine un modèle (étape 130) de la distribution des valeurs d'intensité des raies du spectre à partir de la mesure expérimentale.

Dans le cas de données spectrales obtenues par une méthode d'acquisition LIBS, la source principale de bruit aux faibles intensités et du signal aux fortes intensités est constituée par les photons ayant impacté le détecteur. On peut donc estimer la distribution réelle des données spectrales en utilisant une distribution qui modélise le comptage des photons.

Le modèle de distribution utilisé est donc basé sur une distribution de probabilité de Poisson exprimé par la formule ${P}_{l} \left(X=k\right) = \frac{{l}^{k} {e}^{- l}}{k !}$, où *k* est la variable de la distribution qui est ici l'intensité des raies du spectre et *ℓ* est le paramètre de la loi de Poisson.

Si on note ℓₙ le paramètre de la distribution de Poisson pour le canal de longueur d'onde n, ce paramètre correspond également à la moyenne attendue de la distribution pour le canal n. En conséquence, dans le cadre de l'invention, pour chaque canal de longueur d'onde n, on impose ℓₙ = Iₙ, c'est-à-dire le pic de la distribution de probabilité des spectres synthétiques dans un canal n est égal à l'intensité Iₙ enregistrée pour le canal dans le spectre expérimental qu'on considère pour modéliser les spectres synthétiques (celui fourni en entrée de l'étape 130, éventuellement moyenné à l'étape 122).

Ensuite, à l'étape 140, on génère de nouvelles données spectrales synthétiques à partir du modèle obtenu à l'étape 130 pour chaque canal de longueur d'onde n. Un nouveau spectre synthétique est obtenu en déterminant chaque intensité du spectre pour chaque longueur d'onde n au moyen d'un tirage aléatoire suivant le modèle de distribution d'intensité obtenu à l'étape 130. L'extraction aléatoire est calculée en renversant la fonction de distribution cumulative, et en l'utilisant pour représenter une variable aléatoire, uniformément distribuée dans l'intervalle [0, 1], dans l'espace de probabilité. Il est ainsi possible de générer un nombre arbitraire de spectres ayant statistiquement les mêmes propriétés que les spectres expérimentaux 110.

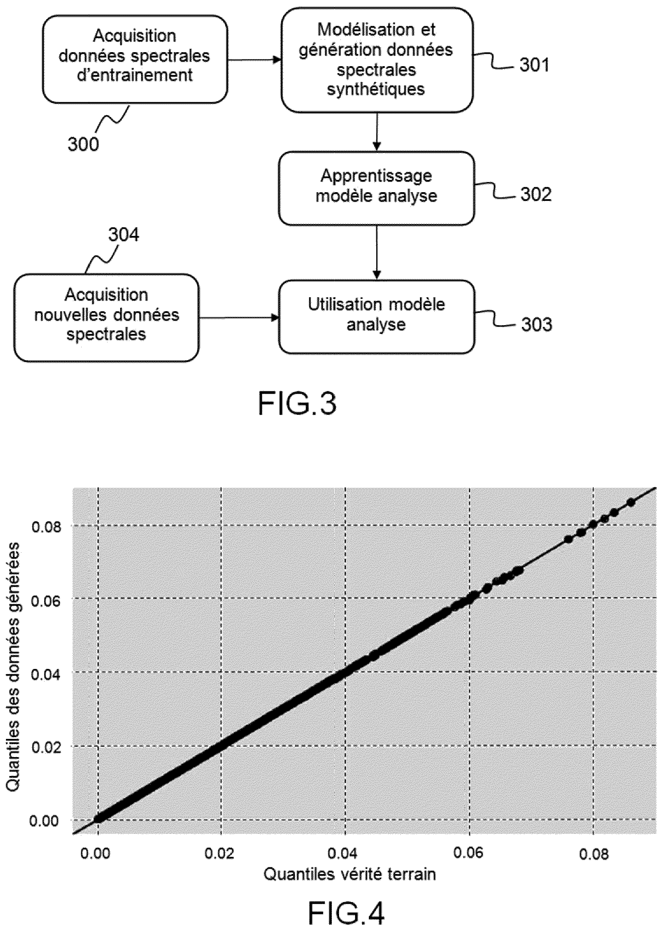

A titre d'exemple illustratif, la Figure 4 montre le diagramme quantile-quantile des distributions réelle et synthétique pour un échantillon de ciment (type I) avec l'ajout de NaCl. Les données ont été synthétisées en modélisant l'intensité par une loi de Poisson. Le diagramme montre des points alignés sur la bissectrice du premier quadrant : les quantiles observés recouvrent efficacement les quantiles de la distribution expérimentale

On obtient alors un ensemble de données spectrales synthétiques 150, en plus grand nombre que ce qu'il serait possible d'obtenir expérimentalement. L'ensemble de données synthétiques 150 peut ensuite être utilisé en tant qu'ensemble d'apprentissage comprenant des spectres qui représentent, en même temps, la même distribution des données d'entrée et des réalisations différentes des mesures expérimentales (c'est-à-dire de nouvelles données, indépendantes des données expérimentales).

Dans une variante de réalisation non couverte par les revendications, au lieu de modéliser l'intensité de chaque canal de longueur d'onde par une loi de Poisson, on peut modéliser la distribution des intensités du spectre en utilisant, par exemple, une méthode non paramétrique d'estimation par noyau de la densité (« kernel density estimation », ou KDE, en anglais, telle que décrite par exemple dans la référence M. Rosenblatt. "Remarks on Some Nonparametric Estimates of a Density Function." Ann. Math. Statist. 27 (3) 832 - 837, September, 1956.). Dans cette variante, on utilise une fonction noyau *K*(*z, h*) pour estimer la densité *f*(*x*) d'une variable aléatoire *x* (l'intensité, dans le cas des spectres), en utilisant un certain nombre de réalisations (spectres expérimentaux) {*x̂ᵢ*}_{*i=*1,}*_{...,N}.* La forme de *f*(*x*) est estimée par une fonction $\hat{{f}_{h}} \left(x\right) = \frac{1}{N} {\sum }_{i = 1}^{N} K \left(x-{x}_{i},h\right)$ pour chaque valeur de *x.* Le paramètre *h* représente une largeur de bande (« bandwidth », en anglais), qui peut être adaptée pour améliorer l'estimation de *f*(*x*) par $\hat{{f}_{h}} \left(x\right)$*.*

La fonction *f*(*x*) peut être estimée par différents choix du noyau *K.* Dans des variantes qui peuvent être utilisées pour l'analyse spectrale, on peut choisir *K*(*x, h*) ∝ *e*^{*-x*2/(2*h*2)} (noyau « Gaussien »), ou, par exemple, *K*(*x, h*) *∝ θ*(*h - x*) (noyau dit « top-hat »), où *θ* est la fonction de Heaviside. Le choix de *h* dépend normalement du type de données à modéliser : une largeur de bande plus faible permet de mieux adapter le profil du noyau aux données, au risque de générer des effets de sur-échantillonnage. Pour choisir *h* on peut, par exemple, utiliser des diagrammes quantile-quantile pour comparer la distribution des données réelles et la distribution des données synthétisées en utilisant l'estimateur $\hat{{f}_{h}} \left(x\right)$ de la densité des intensités spectrales.

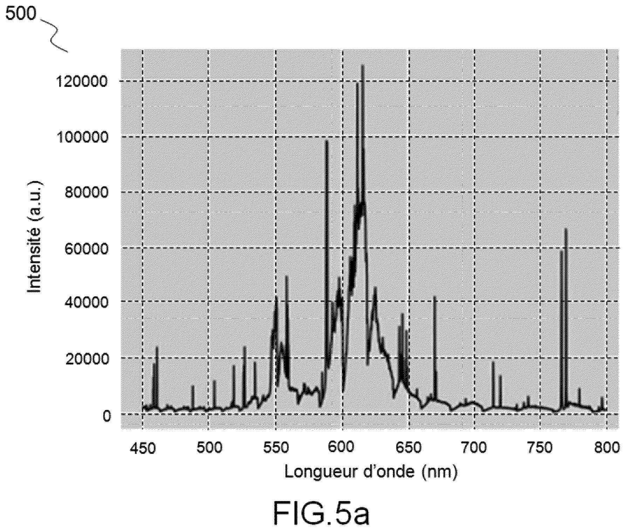

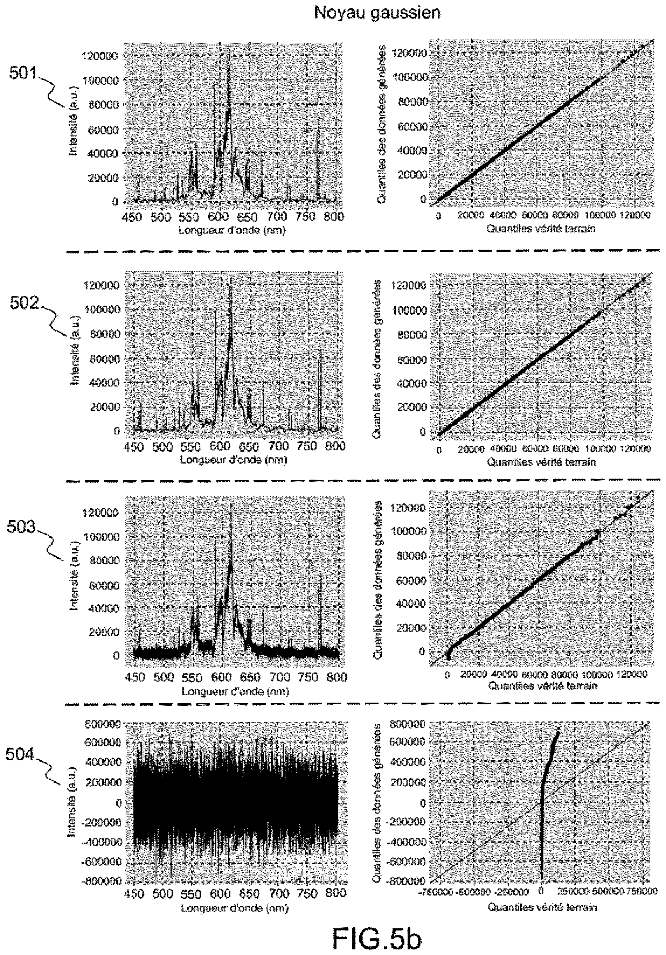

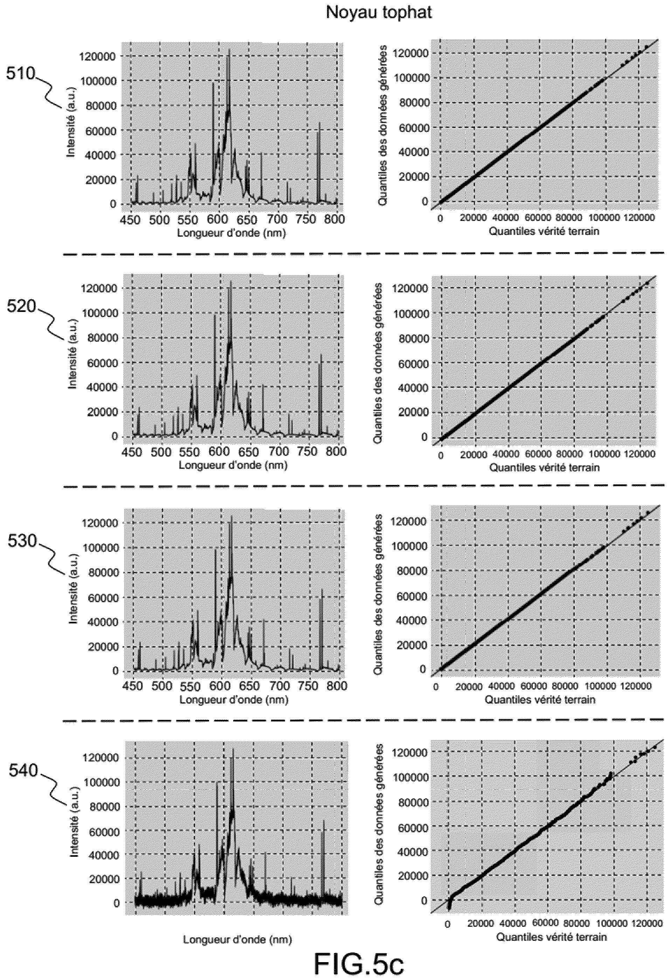

Les figures 5a,5b,5c montrent la comparaison de la modélisation par un noyau Gaussien et un noyau « tophat » d'un échantillon de ciment (type I) avec de l'ajout de NaCl analysé par une technique LIBS. Le spectre moyen 500 est indiqué sur la figure 5a. Différents spectres 501,502,503,504 obtenus pour un noyau Gaussien sont indiqués sur la figure 5b. Différents spectres 510,520,530,540 obtenus pour un noyau « tophat » sont représentés sur la figure 5c.La figure 5 montre la comparaison de la modélisation par un noyau Gaussien et un noyau « top-hat » d'un échantillon de ciment (type I) avec de l'ajout de NaCl analysé par une technique LIBS. Le spectre moyen est indiqué sur la figure 500.

Différents spectres 501,502,503,504 obtenus pour un noyau Gaussien sont indiqués sur la gauche de la figure. Différents spectres 510,520,530,540 obtenus pour un noyau « tophat » sont représentés sur la droite de la figure.

Pour chaque spectre, on représente également un diagramme quantile-quantile associé.

Normalement, les données sont mieux reproduites en utilisant des faibles valeurs de la largeur de bande, puisque les quantiles sont alignés sur la bissectrice du diagramme. Des valeurs plus élevées de *h* montrent une déviation des quantiles aux intensités faibles et élevées. La comparaison montre aussi une meilleure adaptation aux données du noyau « top-hat » pour des valeurs de *h* élevées. En revanche, aux faibles valeurs de *h*, un noyau Gaussien s'ajuste mieux aux données.

Dans une variante de réalisation, la distribution synthétique des données peut être rendue encore plus réaliste en ajoutant lors de la génération 140 des données synthétiques, une source de bruit aléatoire supplémentaire pour chaque canal de longueur d'onde. Une telle source est modélisée comme une différence dans le nombre de photons atteignant le détecteur.

L'intensité d'un spectre pour la longueur d'onde est donnée alors par ${I}_{n}^{′} = \left(1+{U}_{m}\right) {J}_{n}$ , où, pour chaque canal de longueur d'onde n, 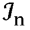 suit une distribution de Poisson 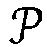 de paramètre Iₙₓ (c'est-à-dire, 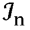 ~ 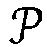 (Iₙ) , où Iₙ est l'intensité enregistrée expérimentalement pour le canal (éventuellement, moyenné à l'étape 122) et correspond à la moyenne attendue de la distribution de 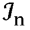 ), m est un paramètre de bruit choisi tel que 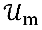 est un nombre uniformément distribué dans l'intervalle [-m, m].

Dans une variante de réalisation, on peut définir ${I}_{n}^{′} = {N}_{m} ⋅ {J}_{n}$, où *m* est un paramètre de bruit choisi tel que *Nₘ* est un nombre distribué selon une loi normale centrée en 1 et avec un écart type *m*, c'est-à-dire *Nₘ* ~ 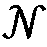 (1*, m*)*.*

Dans une variante de réalisation, les données spectrales synthétiques générées 150 peuvent être ajoutées (étape 160) aux données d'entrée mesurées 110 pour construire un ensemble de données d'apprentissage.

Alternativement, il est aussi possible de n'utiliser que les spectres synthétiques 150 comme ensemble d'apprentissage car, en général, le nombre des spectres générés est bien supérieur au nombre des données expérimentales, au point que ces dernières deviennent statistiquement négligeables.

L'ensemble de données obtenu par la méthode selon l'invention peut être utilisé pour entrainer un moteur d'apprentissage automatique tel qu'illustré sur un exemple à la figure 3.

Les données spectrales synthétiques sont générées à l'étape 301 à partir de premières données spectrales d'entrainement mesurées à l'étape 300, puis elles sont utilisées comme données d'apprentissage pour entrainer un modèle d'analyse à l'étape 302. Le modèle d'analyse peut viser une analyse quantitative, par exemple une estimation de la concentration d'une espèce chimique dans un échantillon à partir de l'analyse de son spectre ou une analyse qualitative, par exemple une classification des spectres en fonction du type d'échantillon.

Le modèle d'apprentissage automatique est par exemple, basé sur un ou plusieurs réseau(x) de neurones convolutif(s) ou tout autre algorithme d'apprentissage automatique équivalent. Les données d'apprentissage peuvent être utilisées pour réaliser un sur-échantillonnage et/ou une régularisation de méthodes d'apprentissage profond. Les références [9]-[10]-[12] donnent, à titre illustratif, différentes méthodes d'apprentissage adaptées à l'analyse qualitative ou quantitative de données spectrales.

Une fois le modèle entrainé, il peut être utilisé à l'étape 303 pour réaliser une analyse qualitative ou quantitative de nouvelles données spectrales mesurées à l'étape 304.

Les étapes de l'invention peuvent être mises en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*")*,* éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

### Références

[1] M. H. Mozaffari and L.-L. Tay, "A Review of 1D Convolutional Neural Networks toward Unknown Substance Identification in Portable Raman Spectrometer," ArXiv200610575 Cs Eess, 2020, Accessed: Oct. 29, 2021. [Online]. Available: http://arxiv.org/abs/2006.10575
[2] L. Narlagiri and V. R. Soma, "Simultaneous quantification of Au and Ag composition from Au-Ag bi-metallic LIBS spectra combined with shallow neural network model for multi-output regression," Appl. Phys. B, vol. 127, no. 9, p. 135, 2021, doi: 10.1007/s00340-021-07681-y.
[3] C. Lu, B. Wang, X. Jiang, J. Zhang, K. Niu, and Y. Yuan, "Detection of K in soil using time-resolved laser-induced breakdown spectroscopy based on convolutional neural networks," Plasma Sci. Technol., vol. 21, no. 3, p. 34014, 2019, doi: 10.1088/2058-6272/aaef6e.
[4] F. Rosenblatt, The perceptron, a perceiving and recognizing automaton Project Para. Cornell Aeronautical Laboratory, 1957.
[5] Y. LeCun et al., "Backpropagation Applied to Handwritten Zip Code Recognition," Neural Comput., vol. 1, no. 4, pp. 541-551, 1989, doi: 10.1162/neco.1989.1.4.541.
[6] Y. LeCun et al., "Handwritten digit recognition with a back-propagation network," Adv. Neural Inf. Process. Syst., vol. 2, 1989.
[7] D. W. Hahn and N. Omenetto, "Laser-Induced Breakdown Spectroscopy (LIBS), Part II: Review of Instrumental and Methodological Approaches to Material Analysis and Applications to Different Fields," Appl. Spectrosc., vol. 66, no. 4, pp. 347-419, 2012, doi: 10.1366/11-06574.
[8] L. Jolivet, M. Leprince, S. Moncayo, L. Sorbier, C.-P. Lienemann, and V. Motto-Ros, "Review of the recent advances and applications of LIBS-based imaging," vol. 151, pp. 41-53, 2019, doi: 10.1016/j.sab.2018.11.008.
[9] C. Shorten and T. M. Khoshgoftaar, "A survey on Image Data Augmentation for Deep Learning," J. Big Data, vol. 6, no. 1, p. 60, 2019, doi: 10.1186/s40537-019-0197-0.
[10] A. Mikolajczyk and M. Grochowski, "Data augmentation for improving deep learning in image classification problem," in 2018 International Interdisciplinary PhD Workshop (IIPhDW), Swinoujście, 2018, pp. 117-122. doi: 10.1109/IIPHDW.2018.8388338.
[11] K. Li, D. Dai, E. Konukoglu, and L. Van Gool, "Hyperspectral Image Super-Resolution with Spectral Mixup and Heterogeneous Datasets," ArXiv210107589 Cs, 2021, Accessed: Jan. 12, 2022. [Online]. Available: http://arxiv.org/abs/2101.07589
[12] Q. Wen et al., "Time Series Data Augmentation for Deep Learning: A Survey," in Proceedings of the Thirtieth International Joint Conference on Artificial Intelligence, Montreal, Canada, 2021, pp. 4653-4660. doi: 10.24963/ijcai.2021/631.
[13] J. Chen, J. Pisonero, S. Chen, X. Wang, Q. Fan, and Y. Duan, "Convolutional neural network as a novel classification approach for laser-induced breakdown spectroscopy applications in lithological recognition," Spectrochim. Acta Part B At. Spectrosc., vol. 166, p. 105801, 2020, doi: 10.1016/j.sab.2020.105801.
[14] L. Zou et al., "Online simultaneous determination of H2O and KCI in potash with LIBS coupled to convolutional and back-propagation neural networks," J. Anal. At. Spectrom., vol. 36, no. 2, pp. 303-313, 2021, doi: 10.1039/D0JA00431F.
[15] T. Chen et al., "Deep learning with laser-induced breakdown spectroscopy (LIBS) for the classification of rocks based on elemental imaging," Appl. Geochem., vol. 136, p. 105135, 2022, doi: 10.1016/j.apgeochem.2021.105135.
[16] L.-N. Li, X.-F. Liu, F. Yang, W.-M. Xu, J.-Y. Wang, and R. Shu, "A review of artificial neural network based chemometrics applied in laser-induced breakdown spectroscopy analysis," Spectrochim. Acta Part B At. Spectrosc., vol. 180, p. 106183, Jun. 2021, doi: 10.1016/j.sab.2021.106183.
[17] J. El Haddad et al., "Artificial neural network for on-site quantitative analysis of soils using laser induced breakdown spectroscopy," Spectrochim. Acta Part B At. Spectrosc., vol. 79-80, pp. 51-57, 2013, doi: 10.1016/j.sab.2012.11.007.
[18] I. Goodfellow, Y. Bengio, and A. Courville, Deep Learning. MIT Press, 2016.
[19] J. J. Bird, D. R. Faria, C. Premebida, A. Ekart, and P. P. S. Ayrosa, "Overcoming Data Scarcity in Speaker Identification: Dataset Augmentation with Synthetic MFCCs via Character-level RNN," in 2020 IEEE International Conference on Autonomous Robot Systems and Competitions (ICARSC), Ponta Delgada, Portugal, 2020, pp. 146-151. doi: 10.1109/ICARSC49921.2020.9096166.
[20] J. Deng, W. Dong, R. Socher, L.-J. Li, K. Li and L. Fei-Fei, ImageNet: A Large-Scale Hierarchical Image Database. IEEE Computer Vision and Pattern Recognition (CVPR), 2009.
[21] Younsik Kim et Al.: "Deep learning-based statistical noise reduction for multidimensional spectral data", ARXIV.ORG, CORNELL UNIVERSITY LIBRARY, 201 OLIN LIBRARY CORNELL UNIVERSITY ITHACA, NY 14853, 2 juillet 2021,DOI: 10.1063/5.0054920

## Revendications

1. Méthode, mise en œuvre par ordinateur, de synthèse de données spectrales comprenant l'étape de :
- Acquérir (110) un ensemble de données spectrales associant chacun un spectre à un échantillon ayant une composition chimique donnée, par une méthode de spectroscopie, chaque spectre présentant une pluralité d'intensités en fonction de canaux de longueurs d'onde
, **caractérisée en ce que** la méthode de synthèse de données spectrales comprend également les étapes de :
- Déterminer (130) un modèle théorique de la distribution des intensités du spectre pour chaque canal de longueur d'onde du spectre basé sur une loi de Poisson,
- Générer (140) un ensemble de données spectrales synthétiques (150) en générant pour chaque canal de longueur d'onde du spectre, une intensité tirée aléatoirement selon une distribution de probabilité selon une loi de Poisson paramétrée par l'intensité mesurée sur le spectre acquis.

2. Méthode de synthèse de données spectrales selon la revendication 1 dans laquelle l'ensemble de données spectrales comprend plusieurs mesures de spectres pour le même échantillon et la méthode comprend une étape (122) de détermination du spectre moyen sur l'ensemble des mesures.

3. Méthode de synthèse de données spectrales selon l'une quelconque des revendications précédentes dans laquelle les données spectrales synthétiques sont générées (140) en ajoutant à l'intensité tirée aléatoirement une valeur de bruit tirée selon une distribution uniforme dans un intervalle centré sur l'intensité et de largeur paramétrable.

4. Méthode de synthèse de données spectrales selon l'une quelconque des revendications 1 ou 2 dans laquelle les données spectrales synthétiques sont générées (140) en ajoutant à l'intensité tirée aléatoirement une valeur de bruit tirée selon une distribution normale centrée sur l'intensité, dont l'écart type est un paramètre modifiable.

5. Méthode de synthèse de données spectrales selon l'une quelconque des revendications précédentes dans laquelle les données spectrales sont acquises (110) au moyen d'une méthode de spectroscopie d'émission atomique de plasma induit par laser.

6. Méthode de synthèse de données spectrales selon l'une quelconque des revendications précédentes dans laquelle les données spectrales proviennent de spectres d'émission ou d'absorption d'espèces chimiques.

7. Méthode d'analyse quantitative ou qualitative de données spectrales comprenant les étapes de :
- Générer (301) un ensemble de données spectrales synthétiques en exécutant la méthode de synthèse de données spectrales selon l'une quelconque des revendications précédentes,
- Entrainer (302) un modèle d'apprentissage automatique à partir des données spectrales synthétiques générées.
- Utiliser (303) le modèle entrainé pour réaliser une analyse quantitative ou qualitative de données spectrales (304).

8. Programme d'ordinateur comportant des instructions pour l'exécution d'une méthode selon l'une quelconque des revendications 1 à 6, lorsque le programme est exécuté par un processeur.

9. Support d'enregistrement lisible par un processeur sur lequel est enregistré un programme comportant des instructions pour l'exécution d'une méthode selon l'une quelconque des revendications 1 à 6, lorsque le programme est exécuté par un processeur.

## Patentansprüche

1. Verfahren zur Synthese von Spektraldaten, das von einem Computer ausgeführt wird und den folgenden Schritt umfasst:
- Erfassen (110) einer Anordnung synthetischer Spektraldaten, in dem jedem Spektrum eine Probe mit einer bestimmten chemischen Zusammensetzung zugeordnet ist, mittels eines spektroskopischen Verfahrens, wobei jedes Spektrum eine Vielzahl von Intensitäten in Abhängigkeit von Wellenlängenkanälen aufweist,
**dadurch gekennzeichnet, dass** das Verfahren zur Synthese von Spektraldaten außerdem die folgenden Schritte umfasst:
- Bestimmen (130) eines theoretischen Modells für die Verteilung der Intensitäten des Spektrums für jeden Wellenlängenkanal des Spektrums auf der Grundlage einer Poisson-Gleichung,
- Erzeugen (140) einer Anordnung synthetischer Spektraldaten (150), indem für jeden Wellenlängenkanal des Spektrums eine Intensität erzeugt wird, die zufällig gemäß einer Wahrscheinlichkeitsverteilung nach einer Poisson-Gleichung ausgewählt wird, die durch die am erfassten Spektrum gemessene Intensität parametrisiert ist.

2. Verfahren zur Synthese von Spektraldaten nach Anspruch 1, wobei der Spektraldatensatz mehrere Spektrenmessungen für dieselbe Probe umfasst und das Verfahren einen Schritt (122) der Bestimmung des mittleren Spektrums über den gesamten Messsatz umfasst.

3. Verfahren zur Synthese von Spektraldaten nach einem der vorstehenden Ansprüche, wobei die synthetischen Spektraldaten erzeugt werden (140), indem zu der zufällig ausgewählten Intensität ein Rauschwert addiert wird, der gemäß einer Gleichverteilung in einem auf die Intensität zentrierten Intervall mit einer parametrierbaren Breite ausgewählt wird.

4. Verfahren zur Synthese von Spektraldaten nach einem der Ansprüche 1 oder 2, wobei die synthetischen Spektraldaten erzeugt werden (140), indem zu der zufällig ausgewählten Intensität ein Rauschwert addiert wird, der gemäß einer auf die Intensität zentrierten Normalverteilung ausgewählt wird, deren Standardabweichung ein einstellbarer Parameter ist.

5. Verfahren zur Synthese von Spektraldaten nach einem der vorstehenden Ansprüche, wobei die Spektraldaten mittels eines Verfahrens der laserinduzierten Plasma-Atomemissionsspektroskopie erfasst werden (110).

6. Verfahren zur Synthese von Spektraldaten nach einem der vorstehenden Ansprüche, wobei die Spektraldaten aus Emissions- oder Absorptionsspektren chemischer Spezies stammen.

7. Verfahren zur quantitativen oder qualitativen Analyse von Spektraldaten, das folgende Schritte umfasst:
- Erzeugen (301) einer Anordnung synthetischer Spektraldaten durch Ausführen des Verfahrens zur Synthese von Spektraldaten nach einem der vorstehenden Ansprüche,
- Trainieren (302) eines maschinelles Lernmodells anhand der erzeugten synthetischen Spektraldaten.
- Verwenden (303) des trainierten Modells zur Durchführung einer quantitativen oder qualitativen Analyse von Spektraldaten (304).

8. Computerprogramm, umfassend Anweisungen zur Ausführung des Verfahrens nach einem der Ansprüche 1 bis 6, wenn das Programm durch einen Prozessor ausgeführt wird.

9. Von einem Prozessor lesbarer Aufzeichnungsträger, auf dem ein Programm aufgezeichnet ist, umfassend Anweisungen zur Ausführung eines Verfahrens nach einem der Ansprüche 1 bis 6, wenn das Programm durch einen Prozessor ausgeführt wird.

## Claims

1. A computer-implemented method for synthesizing spectral data, comprising the step of:
- acquiring (110) a set of spectral data, each associating a spectrum with a sample having a given chemical composition, by a spectroscopic method, each spectrum having a plurality of intensities as a function of wavelength channels,
**characterized in that** the method for synthesizing spectral data also comprises the steps of:
- determining (130) a theoretical model of the distribution of the spectrum's intensities for each wavelength channel of the spectrum based on a Poisson distribution,
- generating (140) a set of synthetic spectral data (150) by generating, for each wavelength channel of the spectrum, an intensity randomly drawn from a probability distribution according to a Poisson distribution configured by the intensity measured in the acquired spectrum.

2. The method for synthesizing spectral data according to claim 1, wherein the spectral data set comprises several spectrum measurements for the same sample and the method comprises a step (122) of determining the average spectrum across the set of measurements.

3. The method for synthesizing spectral data according to any one of the preceding claims, wherein the synthetic spectral data is generated (140) by adding to the randomly drawn intensity a noise value drawn from a uniform distribution in an interval centered on the intensity and with a configurable width.

4. The method for synthesizing spectral data according to any one of claims 1 or 2, wherein the synthetic spectral data is generated (140) by adding to the randomly drawn intensity a noise value drawn from a normal distribution centered on the intensity, the standard deviation of which is a modifiable parameter.

5. The method for synthesizing spectral data according to any of the preceding claims, wherein the spectral data is acquired (110) using a laser-induced plasma atomic emission spectroscopy method.

6. The method for synthesizing spectral data according to any one of the preceding claims, wherein the spectral data are derived from emission or absorption spectra of chemical species.

7. A method for quantitative or qualitative analysis of spectral data comprising the steps of:
- generating (301) a set of synthetic spectral data by executing the method for synthesizing spectral data according to any of the preceding claims,
- training (302) a machine learning model using the generated synthetic spectral data,
- using (303) the trained model to perform a quantitative or qualitative analysis of spectral data (304).

8. A computer program comprising instructions for executing the method according to any one of claims 1 to 6, when the program is executed by a processor.

9. A storage medium readable by a processor with a program stored thereon comprising instructions for executing a method according to any one of claims 1 to 6, when the program is executed by a processor.
